# EUROPEAN PATENT APPLICATION

(11) **EP 4 614 997 A1**
(43) Date of publication of application: **10.09.2025**
(21) Application number: 23899466.9
(22) Date of filing: 17.08.2023
(51) Int. Cl.: H04Q 11/00

(54) **METHOD AND SYSTEM FOR TRANSMITTING SERVICE CODE BLOCK STREAM, AND METHOD AND SYSTEM FOR MONITORING QUALITY OF SERVICE**

(30) Priority: 08.12.2022 CN 202211573291
(71) Applicant: ZTE CORPORATION, Shenzhen, Guangdong 518057 (CN)
(72) Inventor: LIU, Feng, Shenzhen, Guangdong 518057 (CN)
(74) Representative: Ziebig Hengelhaupt Intellectual Property Attorneys Patentanwaltskanzlei PartGmbB
(86) International application number: PCT/CN2023/113585
(87) International publication number: WO 2024/119881

(57) **Abstract**

The present application discloses a method and system for transmitting a service code block stream, and a method and system for monitoring quality of service. The method for transmitting a service code block stream is applied to a first communication device, and comprises: receiving a target service code block stream sent by a second communication device, wherein the first communication device and the second communication device are communication devices in a service pipeline carrying a target service, and the first communication device is configured as a source side of a target TCM segment; inserting a first OAM code block into the target service code block stream, wherein the value of a target field of the first OAM code block is a target value corresponding to the target TCM segment; and transmitting the target service code block stream into which the first OAM code block is inserted.

## Description

### CROSS-REFERENCE TO RELATED APPLICATIONS

The present application claims the priority of the Chinese patent application No. 202211573291.4 filed to the China Patent Office on December 8, 2022, and entitled "METHOD AND SYSTEM FOR TRANSMITTING SERVICE CODE BLOCK STREAM, AND METHOD AND SYSTEM FOR MONITORING QUALITY OF SERVICE", of which the entire contents are incorporated herein by reference.

### TECHNICAL FIELD

Embodiments of the present application relate to the technical field of wireless communications, in particular to a method for transmitting a service code block stream, and a method and system for monitoring quality of service.

### BACKGROUND

Rapid increase in user network information flow has driven the rapid development of a communication network information transmission bandwidth. The interface bandwidth speed of a communication device is increased from 10 M (unit: bits/second, the same later) to 100 M, and then is increased to 1 G and 10 G. Currently, the bandwidth speed has reached 100 G.

In some cases, in order to transmit 400 G services on a 100 G optical module, the International Organization for Standardization defines Flexible Ethernet (FlexE) protocols. In the FlexE protocols, a plurality of 100 G optical modules are combined to form a high-speed transmission path. Four 100 G optical modules are combined through the FlexE protocols to form a 400 G transmission path, which is equivalent to the transmission speed of one 400 G optical module, meeting the transmission requirements of 400 G services without increasing the cost.

When client services are carried using the FlexE protocols, in order to supervise the quality of a service pipeline carrying the client services, an operation, administration, maintenance (OAM) function of the carrying pipeline is specified to detect a status of quality of service of the pipeline, such as a bit error rate, a delay time, and service discard.

However, in some cases, only an end-to-end OAM function of the carrying pipeline can be implemented, but layered or segmented supervision, such as a tandem connection maintenance (TCM) function, for a service pipeline cannot be provided.

### SUMMARY

Embodiments of the present application provide a method for transmitting a service code block stream, and a method and system for monitoring quality of service, which can solve the problem of how to implement a layered or segmented supervision function for a service pipeline.

In order to solve the above technical problem, the present application is implemented as follows.

In a first aspect, a method for transmitting a service code block stream is provided, applied to a first communication device, including: receiving a target service code block stream sent by a second communication device, wherein the first communication device and the second communication device are communication devices in a service pipeline carrying a target service, and the first communication device is configured as a source side of a target TCM segment; inserting a first OAM code block into the target service code block stream, wherein a value of a target field of the first OAM code block is a target value corresponding to the target TCM segment; and transmitting the target service code block stream into which the first OAM code block is inserted.

In a second aspect, a method for monitoring quality of service is provided, applied to a third communication device, including: receiving a target service code block stream sent by a fourth communication device, wherein the third communication device and the fourth communication device are communication devices in a service pipeline carrying a target service, and the third communication device is configured as a sink side of a target TCM segment; monitoring quality of service of the target TCM segment by detecting a first OAM code block in the target service code block stream, wherein a value of a target field of the first OAM code block is a target value corresponding to the target TCM segment; and transmitting the target service code block stream to a fifth communication device, wherein the fifth communication device is a communication device located downstream of the third communication device in the service pipeline.

In a third aspect, a system for monitoring quality of service is provided, including: a first communication device, configured to perform the method for transmitting the service code block stream as described in the first aspect; and a third communication device, configured to perform the method for monitoring the quality of service as described in the second aspect.

In a fourth aspect, a communication device is provided, wherein the communication device includes a processor and a memory, the memory stores a program or an instruction which is able to be run on the processor, and the program or the instruction, when executed by the processor, implements the method for transmitting the service code block stream as described in the first aspect, or implements the method for monitoring the quality of service as described in the second aspect.

In a fifth aspect, a readable storage medium is provided, the readable storage medium stores at least one computer program therein, the computer program is loaded and executed by a processor, so as to implement the method for transmitting the service code block stream as described in the first aspect above, or implement the method for monitoring the quality of service as described in the second aspect above.

In a sixth aspect, a computer program product is provided, the computer program product includes at least one computer program, and the computer program is loaded and executed by a processor to implement the method for transmitting the service code block stream as described in the first aspect above, or implement the method for monitoring the quality of service as described in the second aspect above.

It should be understood that the above general description and the following detailed description are merely exemplary and explanatory, and cannot limit the present application.

### BRIEF DESCRIPTION OF DRAWING(S)

Accompanying drawings here, which are incorporated in and constitute a part of the specification, illustrate embodiments consistent with the present application and together with the specification, serve to explain the principles of the present application.
FIG. 1 shows a schematic diagram of a 400 G transmission path in some cases.
FIG. 2 shows a schematic diagram of an encoding rule for 64/66 encoding in some cases.
FIG. 3 shows a schematic diagram of a service code stream in some cases.
FIG. 4 shows a schematic diagram of inserting an OAM code block into a service code stream in some cases.
FIG. 5 shows a schematic diagram of implementing an OAM function in some cases.
FIG. 6 shows a schematic structural diagram of an OAM code block in some cases.
FIG. 7 shows a schematic diagram of a service path carrying services shown according to an exemplary embodiment.
FIG. 8 shows a schematic flowchart of a method for transmitting a service code block stream provided by an exemplary embodiment of the present application.
FIG. 9 shows a schematic flowchart of a method for monitoring quality of service provided by an exemplary embodiment of the present application.
FIG. 10 is a schematic diagram of an OAM code block shown according to an exemplary embodiment.
FIG. 11 is a schematic diagram of segmented monitoring shown according to an exemplary embodiment.
FIG. 12 is a schematic diagram of an OAM code block shown according to an exemplary embodiment.
FIG. 13 is a schematic diagram of an OAM code block shown according to an exemplary embodiment.
FIG. 14 is a schematic diagram of an OAM code block shown according to an exemplary embodiment.
FIG. 15 is a schematic diagram of an OAM code block shown according to an exemplary embodiment.
FIG. 16 is a schematic diagram of an OAM code block shown according to an exemplary embodiment.
FIG. 17 is a schematic structural diagram of a system for monitoring quality of service shown according to an exemplary embodiment.
FIG. 18 is a structural block diagram of a communication device shown according to an exemplary embodiment.

### DETAILED DESCRIPTION

Exemplary embodiments will be illustrated in detail here, instances of which are represented in the accompanying drawings. When the following descriptions refer to the accompanying drawings, the same number in the different accompanying drawings represents the same or similar elements unless otherwise indicated. The implementations described in the following exemplary embodiments do not represent all implementations consistent with the present application. On the contrary, they are merely examples of an apparatus and method consistent with some aspects of the present application as detailed in the appended claims.

The continuous increase of communication network flow has led to a rapid increase in a service bandwidth of a communication device. The interface speed of a communication device is increased from 10 M bandwidth to 100 M bandwidth, and further increased to 1 G and 10 G. Every few years, the service speed doubles several times to meet the demand for the service flow on the network.

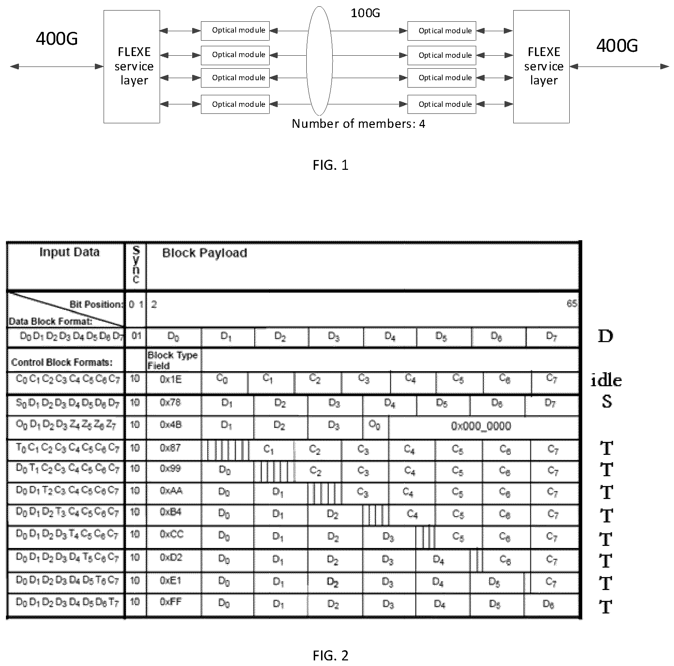

At present, the speed of a commercial optical module for the communication device has reached 100 G and has begun to be widely commercialized. When the speed of the optical module begins to exceed 100 G, the difficulties encountered in a research and development technology of the optical module become increasingly significant, and production costs of the optical module are increased sharply. In the development from 100 G to 400 G, although a 400 G optical module has been developed, the price of the 400 G optical module is high, and has exceeded the price of four 100 G optical modules, resulting in a lack of commercial economic value for the 400 G optical module. In order to meet the transmission requirements of 400 G services and transmit the 400 G services on the 100 G optical modules without increasing costs, the International Organization for Standardization defines FlexE protocols. In the FlexE protocol, a plurality of 100 G optical modules are combined to form a transmission path with a high service speed. As shown in FIG. 1, the four 100 G optical modules are combined to form one 400 G transmission path through the FlexE protocols, which is equivalent to the service transmission speed of one 400 G optical module. This not only meets the transmission requirements of 400 G services, but also achieves the economic value of service transmission.

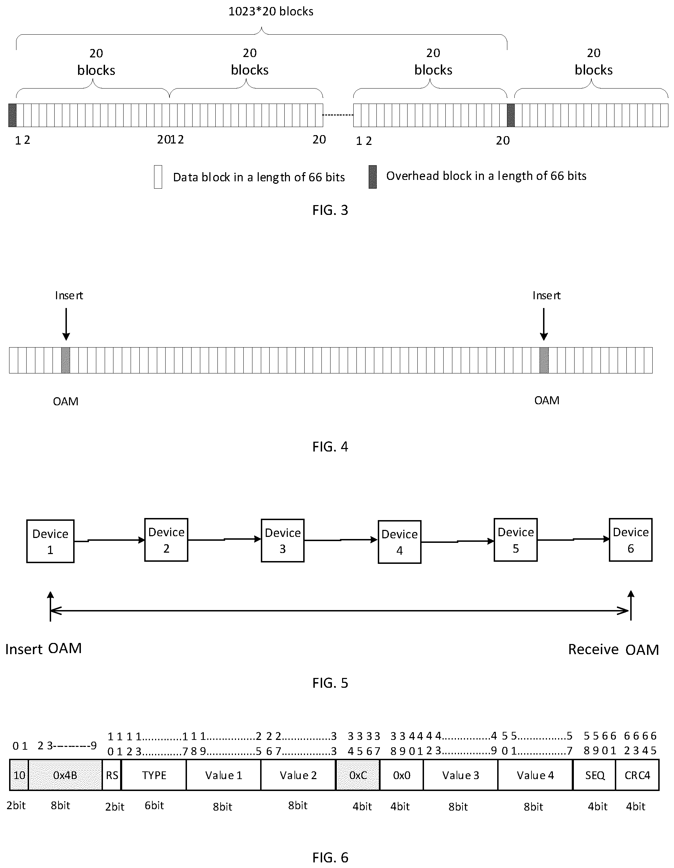

For the physical interface rate of 100 G, when the FlexE protocols are used to carry client services, client messages are subjected to 64/66 encoding before sending. FIG. 2 is an encoding rule of 64/66 encoding developed by the Institute of Electrical and Electronics Engineers (IEEE) organization. The 64/66 encoding process includes: bytes of a client message are divided into 8 byte (64 bit) long groups, and then the 64 bits are encoded into a 66-bit code block (information block) composed of the first 2 bits and the last 64 bits (8 bytes), the first 2 bits are synchronization header bits, and the information block is divided into two types by means of the synchronization header bits: a data block (the first two bits are 01, indicating that the code block is a data block) and a control block (the first two bits are 10, indicating that the code block is a control block). The control block may also be divided into different types, distinguished by a first byte in the control block. The control block includes: an idle block (a control type value of the first byte is 0x1E, abbreviated as an I block), an O code block (a control type value of the first byte is 0x4B), an S code block (a control type value of the first byte is 0x78), and a T code block (in which a control type value of the first byte includes 8 types, such as 0x87, 0x99, ..., and 0xFF, representing T0, T1... T7 respectively). The client message is sent out through an optical port after being subjected to 64/66 encoding. During receiving, the optical port locates a 66-bit code block from a received data stream and recovers an original client message from the 66-bit code block. The FlexE protocols run at a 66-bit code block layer, as shown in FIG. 3. For 100 G services, every 20 66-bit code blocks form one code block group, with a total of 20 code blocks in each group, representing 20 time slots respectively. Each time slot represents the bandwidth speed of a 5th generation mobile communication technology (5G). When the 66-bit code block is sent, a FlexE overhead block, such as a black filling block in FIG. 3, is inserted every time after 1023 code block groups (1023*20 code blocks) are sent. After the overhead block is inserted, the client code block continues to be sent. After the second 1023*20 client code blocks are sent, the overhead block is inserted again, and so on. The overhead block is periodically inserted in the process of sending the client code block, with an interval of 1023*20 client code blocks between the adjacent two overhead blocks.

The client messages are carried and transmitted in one or more time slots specified in the FlexE protocols. In order to detect the quality of service of the network carrying the client messages, as shown in FIG. 4, an OAM code block (the OAM code block carries maintenance and administration information) is inserted into a sent client message code block stream. In this way, the OAM code block and the client message code block are carried and transmitted together, the OAM code block and the client message code block have the same transmission path, and the quality of service of a carrying pipeline can be monitored through the OAM code block. The specific implementation is as shown in FIG. 5. Device 1 inserts an OAM code block into the sent client message code block, the OAM code block and the client message code block are transmitted together through the network, and the OAM code block is detected in a receiving end device 6. The quality condition of the pipeline can be monitored by analyzing the content. The OAM code block can carry different type values to achieve different monitoring functions, such as error code detection, path connection monitoring, connection verification, remote error code, remote fault, delay measurement, fast protection switching, client signal failure, and client signal type indication. For example, a sending end device continuously sends the OAM code blocks at a fixed cycle, and a receiving end does not receive the OAM code blocks for several consecutive cycles, then it is judged that the pipeline carrying the client service has an interruption fault, and a connection monitoring fault is reported.

FIG. 6 is an OAM code block format developed in some cases, an O code block format in the Ethernet standard is extended, and an extended format serves as the OAM code block format. In the Ethernet standard, the O code block is a control code block, a 2-bit synchronization header bit value is "10", a control word content is "0x4B", values of 34th-37th bits in a code block is a sequence value of the O code block, and different sequence values represent different content of the O code blocks. Four sequence values of 0x0, 0x1, 0x2 and 0xF are enabled in the Ethernet standard, an 0xC sequence value is enabled in the China Mobile Enterprise standard, and an O code block of the 0xC sequence value is used as the OAM code block. The OAM code block uses a combination of a synchronization header "10", a control word "0x4B", and an O sequence value "0xC" as a flag value of the OAM block, and a code block complying with the flag value is the OAM code block. The 10th bit and the 11th bit in the OAM code block are reserved bits, and the 12th-17th bits are a type field of the OAM code block and are used for various different types of OAM code blocks; the 18th-33th bits and the 42th-57th bits are used to carry the content of the OAM code block; the 38th-41th bits are reserved bits; the 58th-61th bits are used to transmit a plurality of OAM code block sequence numbers; and the 62th-65th bits are used to transmit a cyclic redundancy check (CRC) value. The sending device inserts the OAM code block when sending a client code block, and a receiving device checks the condition of the OAM code block in the client service code block when receiving the client code block, so as to realize the condition of the quality of service of a network pipeline.

A function of detecting the quality of service between a client service source side device and a sink side device can be achieved by a current OAM function. In practical applications, the network crosses a large geographic space, network devices provided by a plurality of different manufacturers are involved in the process. The network formed by the plurality of different manufacturers is transmitted through relay. The current OAM function can be only used to detect whether there is a fault or interruption between the source side device and the sink side device, but cannot locate which subnet range where the fault occurred in, nor can it continue protection switching within a smaller subnet range.

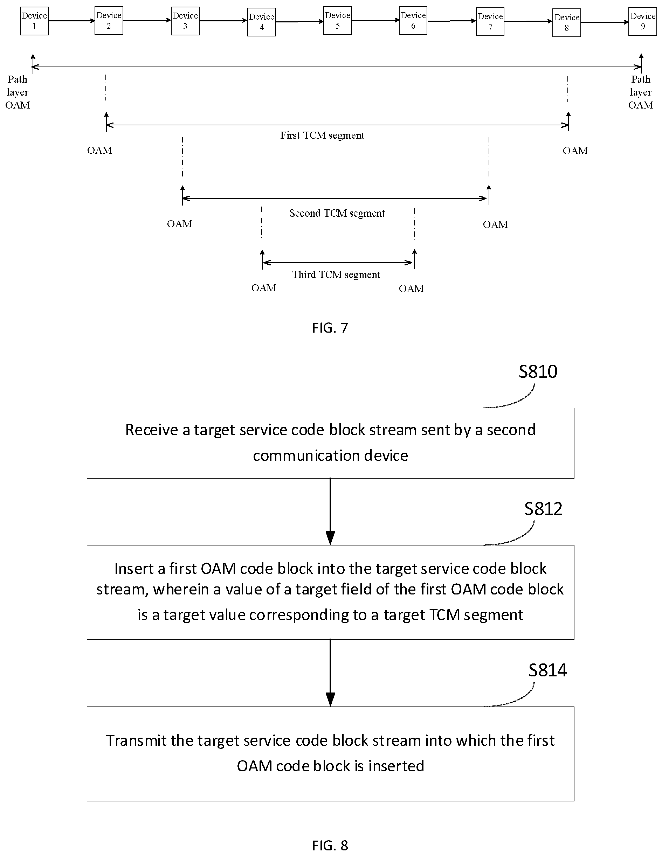

Therefore, it is necessary to implement multi-level monitoring for the quality of service of the service pipeline carrying the client service. Aiming at this technical problem, embodiments of the present application provide a method for transmitting a service code block stream, and a method for monitoring quality of service, so as to achieve multi-level quality of service monitoring for the service pipeline carrying the client service. In the embodiments of the present application, multi-segment (also known as multi-layer) monitoring is set up for the service pipeline, and as shown in FIG. 7, the three-layer TCM monitoring requirement is achieved. Three layers of service monitoring are added to the carrying pipeline between the source side device and the sink side device, each layer is a subnet, and the condition of the quality of service of each subnet is monitored. When there is an interruption or other fault within the subnet, protection switching is performed within this subnet, and devices outside this subnet do not participate in protection switching, thereby reducing the number of devices participating in protection switching. In FIG. 7, the client service is carried between the device 1 and a device 9. The device 1 sends a client code block and inserts an OAM code block, and the device 9 receives the client code block and the OAM code block to detect the quality of service of the client service carrying pipeline. This layer of OAM is called a path layer OAM. Three layers of TCM functions are enabled between the device 1 and the device 9. A first layer of TCM function is enabled between a device 2 and a device 8, a second layer of TCM function is enabled between a device 3 and a device 7, and a third layer of TCM function is enabled between a device 4 and a device 6. When a device 5 has a fault and causes a fault in the service carrying pipeline, the third layer of TCM function between the device 4 and the device 6 first detects the fault, and quickly performs switching and quickly recovers the client service. In this way, the device 1 to the device 4 and the device 6 to the device 9 are not affected, and do not need to participate in the protection switching when the device 5 has a fault.

The technical solutions provided by the embodiments of the present application are illustrated below in combination with the accompanying drawings.

FIG. 8 shows a flowchart of a method for transmitting a service code block stream provided by an exemplary embodiment of the present application. The method may be applied to a first communication device. As shown in FIG. 8, the method for transmitting the service code block stream mainly includes the following steps.

S810, a target service code block stream sent by a second communication device is received.

The first communication device and the second communication device are communication devices in a service pipeline carrying a target service, and the first communication device is configured as a source side of a target TCM segment.

In the embodiment of the present application, the first communication device may be an intermediate node of the service pipeline of the target service, namely, a communication device in the service pipeline of the target service other than a sending end and a receiving end. The second communication device may be the sending end in the service pipeline of the target service, or a downstream node of the sending end. The first communication device is a downstream node of the second communication device.

For example, in the service pipeline shown in FIG. 7, the second communication device may be a device 1 and the first communication device may be a device 2, or the second communication device may be the device 2 and the first communication device may be a device 3, or the second communication device may be the device 3 and the first communication device may be a device 4.

In the embodiment of the present application, the first communication device is configured as the source side of the target TCM segment in the service pipeline of the target service. Therefore, in the embodiment of the present application, the first communication device is not an upstream node closest to the receiving end of the service pipeline. For example, in FIG. 7, the device 2 is configured as a source side of a first TCM segment (also known as a first TCM layer), the device 3 is configured as a source side of a second TCM segment (also known as a second TCM layer), and the device 4 is configured as a source side of a third TCM segment (also known as a third TCM layer).

In the embodiment of the present application, the target service code block stream may include an OAM code block inserted by the sending end in a manner shown in FIG. 4, and the OAM code block carries maintenance and administration information.

In some applications, at least one TCM segment may be pre-set for a service path of the target service, and a source side and a sink side of each TCM segment are set. A communication device configured as the source side processes the target service code block stream according to the method provided in the embodiment of the present application after receiving the target service code block stream of the target service.

S812, a first OAM code block is inserted into the target service code block stream, wherein a value of a target field of the first OAM code block is a target value corresponding to the target TCM segment.

In the embodiment of the present application, as the source side of the target TCM segment, the first communication device inserts the first OAM code block into the target service code block stream after receiving the target service code block stream. The value of the target field of the first OAM code block is the target value corresponding to the target TCM segment, and the value of the target field may indicate subsequent communication devices that the first OAM code block is used to detect the quality of service of the target TCM segment.

In an optional implementation, the first communication device may periodically insert the first OAM code block into the target service code block stream according to a preset code block interval. Of course, it is not limited to this. In practical applications, the first OAM code block may not be inserted according to a preset cycle, which may be specifically determined according to a status of quality of service to be actually detected.

S814, the target service code block stream into which the first OAM code block is inserted is transmitted.

In the embodiment of the present application, the service pipeline of the target service is divided into the plurality of TCM segments. The source side of the TCM segment inserts the first OAM code block into the target service code block stream, and the value of the target field of the first OAM code block is the target value corresponding to the TCM segment, so that the sink side of the TCM segment may determine to monitor the quality of service of the corresponding TCM segment by detecting the first OAM code block, thereby achieving layered or segmented supervision of the service pipeline.

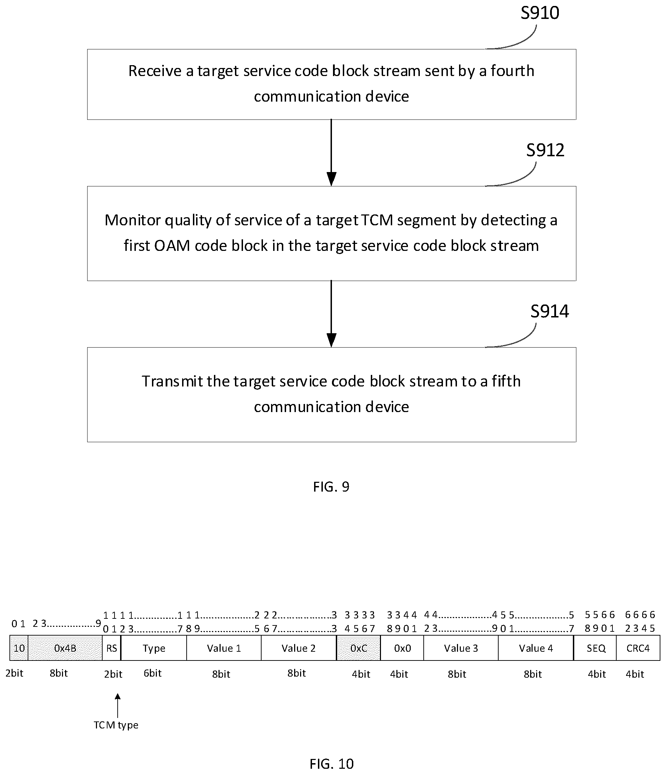

FIG. 9 shows a flowchart of a method for monitoring quality of service provided by an exemplary embodiment of the present application. The method may be applied to a third communication device. As shown in FIG. 9, the method for monitoring quality of service mainly includes the following steps.

S910, a target service code block stream sent by a fourth communication device is received.

The third communication device and the fourth communication device are communication devices in a service pipeline carrying a target service, and the third communication device is configured as a sink side of a target TCM segment.

In the embodiment of the present application, the third communication device may be an intermediate node of the service pipeline of the target service, that is, the third communication device may be a communication device in the service pipeline of the target service other than a sending end and a receiving end. The fourth communication device may also be an intermediate node of the service pipeline of the target service. The third communication device is a downstream node of the fourth communication device.

For example, in the service pipeline shown in FIG. 7, the third communication device may be a device 6 and the fourth communication device may be a device 5, or the third communication device may be a device 7 and the fourth communication device may be the device 6, or the third communication device may be a device 8 and the fourth communication device may be the device 7.

In the embodiment of the present application, the third communication device is configured as the sink side of the target TCM segment in the service pipeline of the target service. Therefore, in the embodiment of the present application, the third communication device is not a downstream node closest to the sending end of the service pipeline. For example, in FIG. 7, the device 8 is configured as a sink side of a first TCM segment (also known as a first TCM layer), the device 7 is configured as a sink side of a second TCM segment (also known as a second TCM layer), and the device 6 is configured as a sink side of a third TCM segment (also known as a third TCM layer).

In some applications, at least one TCM segment may be pre-set for a service path of the target service, and a source side and a sink side of each TCM segment are set. A communication device configured as the sink side processes the target service code block stream according to the method provided in the embodiment of the present application after receiving the target service code block stream of the target service.

In the embodiment of the present application, the third communication device may be a communication device corresponding to the first communication device in the above embodiment, the first communication device is the source side of the target TCM segment, and the third communication device is the sink side of the target TCM segment.

S912, the quality of service of the target TCM segment is monitored by detecting a first OAM code block in the target service code block stream.

A value of a target field of the first OAM code block is a target value corresponding to the target TCM segment.

In the embodiment of the present application, the third communication device may detect the first OAM code block in the target service code stream according to the value of the target field of the OAM code block, and monitor the quality of service of the target TCM segment by detecting the first OAM code block. For example, by detecting the first OAM code block in the target service code stream, the status of quality of service, such as a bit error rate, a delay time, service discard, and other functions, of a detection pipeline of the target TCM segment may be monitored.

In an optional implementation, S912 may include the following steps:
step 1, the first OAM code block contained in the target service code block stream is detected; and
step 2, whether a service carrying pipeline between the source side of the target TCM segment and the sink side of the target TCM segment has a fault is determined according to the detected first OAM code block.

For example, a transmission delay of the target TCM segment may be judged according to a time when the first OAM code block is found by detection, or whether there is packet loss in the target TCM segment may also be judged according to the number of first OAM code blocks detected within a preset time.

In an optional implementation, when it is detected that the service carrying pipeline between the source side of the target TCM segment and the sink side of the target TCM segment has a fault, the service carrying pipeline between the source side of the target TCM segment and the sink side of the target TCM segment is switched. For example, a transmission node between the source side of the target TCM segment and the sink side of the target TCM segment may be switched.

S914, the target service code block stream is transmitted to a fifth communication device.

The fifth communication device is a communication device located downstream of the third communication device in the service pipeline.

In an optional implementation, in order to avoid the impact of the first OAM code block used to detect the pipeline quality of the target TCM segment on downstream communication devices, in S914, the third communication device may extract the first OAM code block from the received target service code block stream, and then transmit the target service code block stream from which the first OAM code block is extracted to the fifth communication device.

The fifth communication device is the downstream device of the third communication device, and the fifth communication device may be a node in the service pipeline of the target service. For example, in FIG. 7, the fifth communication device may be a device 7, a device 8, or a device 9.

Through the technical solution provided in the embodiment of the present application, the third communication device detects the first OAM code block by detecting the value of the target field in the OAM code block, and monitors the quality of service of the target TCM segment according to a detection result of the first OAM code block, thereby achieving multi-level monitoring for the quality of service of the service pipeline carrying client services.

In an optional implementation, the target field may be a reserved field of the OAM code block.

In a standard used in some cases, the 10th bit and the 11th bit in the OAM code block are reserved bits. Therefore, in an optional implementation, the reserved field may be the 10th-11th bits of the OAM code block. As shown in FIG. 10, the target TCM segment may be indicated by the 10th bit and the 11th bit. In this optional implementation, the reserved field of the OAM code block may be extended into a TCM identification field, and a content of the TCM identification field represents different levels of OAM functions.

In the above possible implementation, taking the service path of the target service being divided into three segments as an example, the value of the reserved field (i.e., the TCM identification field) may include one of the following: a first value, a second value, a third value or a fourth value.

The first value is used to indicate that the OAM code block is a code block of path layer OAM; that is to say, when the value of the reserved field of the OAM code block is the first value, it indicates that the OAM code block is the code block of the path layer OAM, that is, the OAM code block is used to detect quality of service of the service path.

The second value is used to indicate that the OAM code block is a code block of a first TCM segment; that is to say, when the value of the reserved field of the OAM code block is the second value, it indicates that the OAM code block is the code block of the first TCM segment, that is, the OAM code block is used to detect quality of service of the first segment of the service path.

The third value is used to indicate that the OAM code block is a code block of a second TCM segment; that is to say, when the value of the reserved field of the OAM code block is the third value, it indicates that the OAM code block is the code block of the second TCM segment, that is, the OAM code block is used to detect quality of service of the second segment of the service path.

The fourth value is used to indicate that the OAM code block is a code block of a third TCM segment; that is to say, when the value of the reserved field of the OAM code block is the fourth value, it indicates that the OAM code block is the code block of the third TCM segment, that is, the OAM code block is used to detect quality of service of the third segment of the service path.

In the above implementation, the target value of the reserved field of the first OAM code block includes one of the following: the second value, the third value, or the fourth value.

For example, a value of the TCM identification field of the OAM code block may be one of the following: 00, representing the path layer OAM, as content of the reserved value in the current relevant standards; 01, representing OAM of the first layer (i.e. the first segment) of TCM function; 10, representing OAM of the second layer of TCM function; or 11, representing OAM of the third layer of TCM function.

However and in some applications, the meanings of the above values may not be limited to the combinations mentioned above. For example, 11 may also represent the OAM of the first layer of TCM function, and 01 may represent the OAM of the third layer of TCM function.

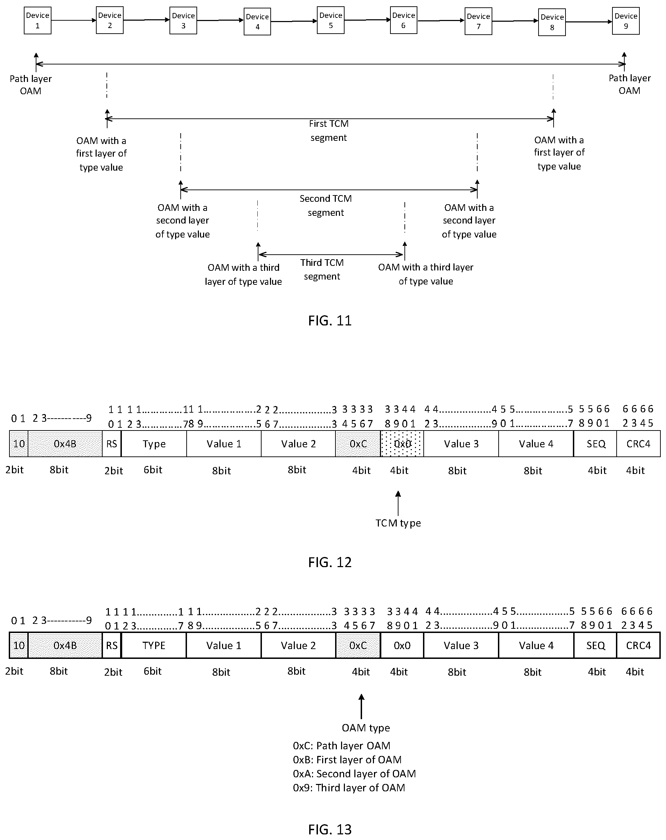

Through the above solution provided by the embodiment of the present application, by defining the layered TCM function, the device operates according to the current standard content for the current path layer OAM during application. The device at the source side inserts the OAM code block when sending a client message, and the TCM identification field (the TCM field for short) in the OAM code block remains at a default value "00" defined by the standard. The receiving device at the sink side receives and extracts the OAM code block to monitor the quality of service of the pipeline. When the first layer of TCM function is enabled, as shown in FIG. 11, for example, the first layer of TCM (a first TCM segment) function is enabled between the device 2 and the device 8, both the device 2 and the device 8 operate in the first layer of TCM function mode and operate according to the TCM identification field value of the first layer of OAM. Similarly, when the second layer of TCM function is enabled between the device 3 and the device 7, both the device 3 and the device 7 operate in the second layer of OAM function mode and operate according to the TCM identification field value of the second layer of OAM. When the third layer of TCM function is enabled between the device 4 and the device 6, both the device 4 and the device 6 operate in the third layer of OAM function mode and operate according to the TCM identification field value of the third layer of OAM. The device 1 is a source device carrying the client service. When sending a client code block, the source device inserts the OAM code block. The TCM identification field value of the OAM code block is 0, which is a default value defined by the current standard and represents the path layer OAM code block. The client message code block and the path layer OAM code block are sent from the device 1 to the device 2. Because the device 2 is the source device of the first layer of TCM, the device 2 inserts the OAM code block of the first layer of TCM into the received code block stream, and the TCM identification field value in the OAM code block is "01", indicating the code block of first layer of OAM. Similarly, because the device 3 is the source device of the second layer of TCM, the device 3 inserts the OAM code block of the second layer of TCM into the received code block stream, and the TCM identification field value in the OAM code block is "10", indicating the second layer of OAM code block. Because the device 4 is the source device of the third layer of TCM, the device 4 inserts the OAM code block of the third layer of TCM into the received code block stream, and the TCM identification field value in the OAM code block is "11", indicating the third layer of OAM code block. The sink device at the receiving end identifies the OAM code block and the content of the TCM identification field of the OAM code block to determine a network hierarchy relationship to which the OAM belongs. For example, the device 6 is the sink device of the third layer of TCM, detects and extracts the OAM code block of the third layer of TCM, and completes the quality of service monitoring function of the third layer of TCM. When extracting the OAM code block, the device 6 only detects and extracts the OAM code block with the TCM identification field value of "11" in the OAM code blocks, ignores and passes through the OAM code blocks with the TCM identification field values of "10", "01", and "00". In this way, the path layer OAM code block sent by the device 1, the OAM code block of the first layer of TCM function sent by the device 2, and the OAM code block of the second layer of TCM function sent by the device 3 are not affected. After extracting the OAM code block carrying the identification field of the third layer of TCM, the device 6 analyzes the content of the OAM code block of the third layer of TCM to achieve the maintenance and monitoring function of the third layer of TCM. The device 6 extracts and peels off the OAM block of the third layer of TCM, and no longer sends the OAM code block of the third layer of TCM to the device 7, which does not affect the processing of the code block stream of the device 7. Similarly, the device 7 is the sink device of the second layer of TCM, detects, extracts and peels off the OAM code block of the second layer of TCM, and completes the quality of service monitoring function of the second layer of TCM. The device 8 is the sink device of the first layer of TCM, detects, extracts and peels off the OAM code block of the first layer of TCM, and completes the quality of service monitoring function of the first layer of TCM. In this way, the maintenance and monitoring functions of the first layer of TCM, the second layer of TCM, and the third layer of TCM are respectively completed between the device 2 and the device 8, between the device 3 and the device 7, as well as between the device 3 and the device 6, achieving the layered TCM maintenance and monitoring function for the network.

In the above implementation, the reserved fields at positions of the 10th bit and the 11th bit of the path layer OAM code block are extended, and the reserved fields are extended into the content of the TCM identification field, so as to construct OAM code block structures at different levels to achieve the layered TCM function.

In a standard used in some cases, the 38th-41th bits in the OAM code block are reserved bits. Therefore, in an optional implementation, the reserved field may be the 38th to 41th bits of the OAM code block.

In the above possible implementation, optionally, the value of the reserved field includes one of the following: a first value, used to indicate that the OAM code block is the code block of the path layer OAM; a second value, used to indicate that the OAM code block is the code block of the first TCM segment; a third value, used to indicate that the OAM code block is the code block of the second TCM segment; a fourth value, used to indicate that the OAM code block is the code block of the third TCM segment; or a fifth value, being a reserved value and including a value, except the first value, the second value, the third value, and the fourth value, in all values that are able to be represented by the 38th to 41th bits.

The target value includes one of the following: the second value, the third value, or the fourth value.

In the above optional implementation, the content at the 38th to 41th bits in the OAM code block is extended into the TCM identification field, and different values indicate different purposes of the OAM code block. For example, taking the service path including three layers of TCM (i.e. three TCM segments) as an example, the value of bits 38-41 in the OAM code block may be: 0000: representing the path layer OAM and a reserved value content of the current standard; 0001: representing OAM of the first layer of TCM function; 0010: representing OAM of the second layer of TCM function; 0011: representing OAM of the third layer of TCM function; or 0100-1111: reserved.

FIG. 12 shows a schematic diagram of the position of the extended TCM identification field in the OAM code block. Although the correspondence between the values of different TCM identification fields and their indication meanings is given above, it is not limited to this and may also be other correspondences, for example, "0101" represents the OAM of the first layer of TCM function; "1010" represents the OAM of the second layer of TCM function; and "1111" represents the OAM of the third layer of TCM function, which is not specifically limited in the embodiment of the present application.

In an optional implementation, the target field may also be a feature field of the OAM code block. For example, in some cases, an O sequence value at positions of 34th-37th bits of the OAM code block is 0xC as the feature value of the path layer OAM code block. To achieve the TCM function, the O sequence value may be extended into other values as the standard content of the TCM identification field, and each TCM segment is indicated through the values at the positions of the 34th-37th bits.

For example, taking the service path including three layers of TCM (i.e. three TCM segments) as an example, as shown in FIG. 13, the O sequence value is extended into the TCM identification field, and the TCM identification field value may be one of the following: 0xC: representing the path layer OAM and the content defined by the current standard field; 0xB: representing OAM of the first layer of TCM function; 0xA: representing OAM of the second layer of TCM function; or 0x9: representing OAM of the third layer of TCM function.

Although the above provides the correspondence between the values of different TCM identification fields and their indication meanings, it is not limited to this and may also be other correspondences, for example, 0x3 represents the OAM of the first layer of TCM function; 0x4 represents the OAM of the second layer of TCM function; and 0x5 represents the OAM of the third layer of TCM function.

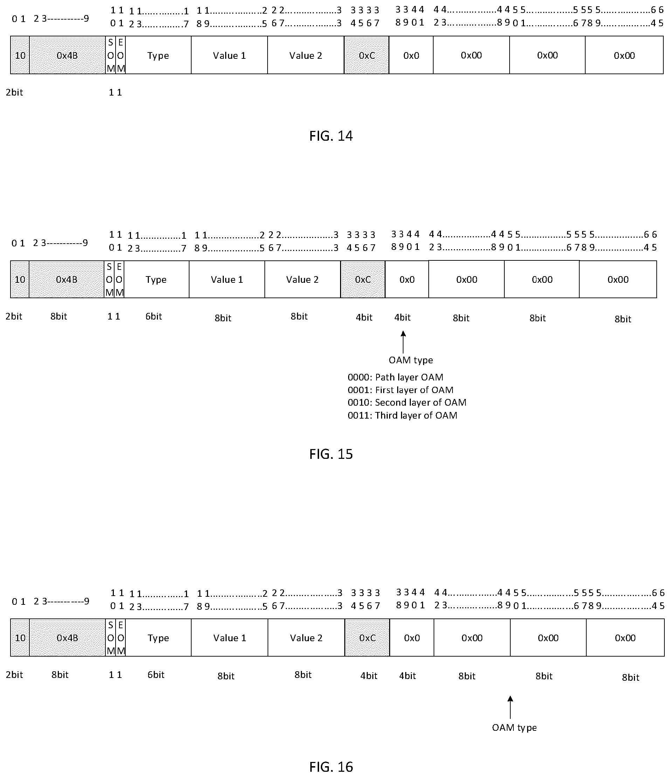

In addition, in some cases, another OAM code block format is provided, and the format is as shown in FIG. 14. For the OAM code block in this format, the reserved positions of the 38th-41th bits of the OAM code block may be extended into the TCM function, as shown in FIG. 15. In this implementation, the content at the positions of the 38th-41th bits in the OAM code block is extended into the TCM identification field, and the value of the TCM identification field may include one of the following: 0000: representing the path layer OAM, namely the reserved value content of the current China Mobile standard; 0001: representing the OAM of the first layer of TCM function; 0010: representing the OAM of the second layer of TCM function; or 0011: representing the OAM of the third layer of TCM function; and 0100-1111: reserved.

The content of the TCM identification field shown in FIG. 15 is an optional content, which can be extended into other contents in specific implementation, for example, "0101" represents the OAM of the first layer of TCM function; "1010" represents the OAM of the second layer of TCM function; and "1111" represents the OAM of the third layer of TCM function. In addition, as shown in FIG. 16, the TCM identification field position may also be located at a bit position of any part of the 42th-65th bits in the code block.

In the technical solution provided by the embodiment of the present application, different levels of OAM code block types are defined by extending the TCM identification field, the OAM code block of this level is inserted into the source device in the corresponding level of network, and the OAM code block of this level is extracted and peeled off from the sink device in this level of network. By analyzing the extracted OAM, quality of service monitoring and protection switching during fault of this level of network are achieved. When implementing the layered TCM function through network layering, the OAM code block of the current layer is inserted into each layer. As the layer increases, the number of inserted OAM code blocks also increases. After inserting the OAM mode, it is necessary to delete the corresponding number of idle code blocks to maintain the code block stream speed unchanged. When the number of idle code blocks in the original client code block stream is limited, only a part of OAM code blocks may be inserted into each layer in a case of not meeting a scenario of inserting the OAM code blocks into the multiple layers of TCM. There are many types of OAM code blocks defined by the current standard, such as basic code blocks, protection switching code blocks, delay measurement code blocks, and client identification code blocks, which can achieve function requirements, such as error code detection, path connection monitoring, connection verification, remote error code, remote fault, delay measurement, fast protection switching, client signal failure, and client signal respectively. At the path layer, all function requirements generally need to be implemented. In other TCM layered networks, it is generally only necessary to implement the fast protection switching function, without the need to implement delay measurement and other functions. Therefore, only one or two OAM code blocks from the basic code blocks and the protection switching code blocks need to be inserted into the TCM layer, without the need to insert delay measurement and client identification code blocks, which reduces the OAM code blocks inserted when enabling multi-layer TCM functions.

It should be noted that although the above implementation lists several possible positions for the target field, it is not limited to this. In specific applications, the target field may also be located in other positions of the OAM code block.

In addition, although illustration is made in the above examples of the embodiments of the present application by taking three TCM segments as an example, it is not limited to this. In specific applications, the TCM segments may be flexibly set according to the number of transmission nodes included in the service path carrying the service. For example, assuming that the service path includes a total of 7 transmission nodes (i.e. communication devices), two TCM segments may be set. If the service path includes 11 transmission nodes, three TCM segments may be set, or four TCM segments may be set. If the service path includes more transmission nodes, more TCM segments may be set, or two or three segments may be maintained. The number of bits occupied by the corresponding target field may be determined according to the number of TCM segments included, which is specifically not limited in the embodiments of the present application.

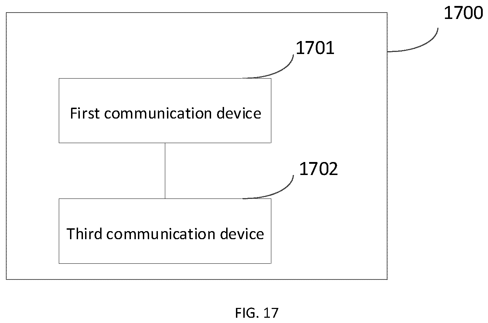

FIG. 17 shows a schematic diagram of a system for monitoring quality of service according to an exemplary embodiment of the present application. As shown in FIG. 17, the system 1700 mainly includes a first communication device 1701, configured to implement steps of the method executed by the first communication device above, wherein for details, reference may be made to the description in the above method embodiments, which is not repeated here; and a third communication device 1702, configured to implement the steps of the method executed by the third communication device above, wherein for details, reference may be made to the description in the above method embodiments, which is not repeated here.

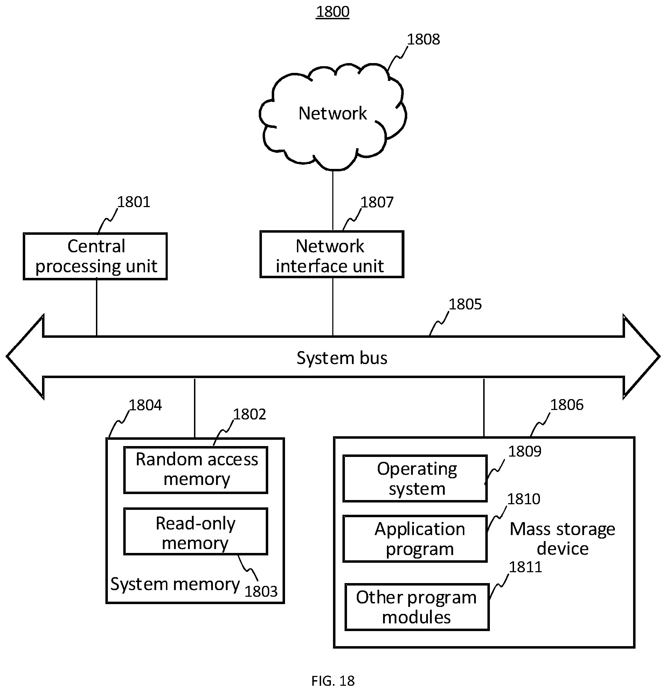

Fig. 18 shows a structural block diagram of a communication device 1800 shown by an exemplary embodiment of the present application. The communication device may be implemented as a cloud terminal management platform or a cloud server built with a cloud terminal in the above solution of the present application. The communication device 1800 includes a central processing unit (CPU) 1801, a system memory 1804 including a random access memory (RAM) 1802 and a read-only memory (ROM) 1803, and a system bus 1805 connecting the system memory 1804 with the central processing unit 1801. The communication device 1800 further includes a mass storage device 1806 for storing an operating system 1809, an application program 1810, and other program modules 1811.

Without loss of generality, a computer-readable medium may include a computer storage medium and a communication medium. The computer storage medium includes volatile and nonvolatile, removable and non-removable media implemented in any method or technology for storing information such as computer-readable instructions, data structures, program modules, or other data. The computer storage medium includes a RAM, a ROM, an erasable programmable read only memory (EPROM), an electrically-erasable programmable read-only memory (EEPROM), a flash memory or other solid-state storage technologies, a compact disc read-only memory (CD-ROM), a digital versatile disc (DVD) or other optical storage, cassette, magnetic tape, magnetic disk storage or other magnetic storage devices. Of course, those skilled in the art may know that the computer storage medium is not limited to the above-mentioned types. The system memory 1804 and the mass storage device 1806 mentioned above may be collectively referred to as the memory.

According to various embodiments of the present disclosure, the communication device 1800 may also operate via a remote computer connected to a network through the Internet and other networks. That is to say, the communication device 1800 may be connected to a network 1808 through a network interface unit 1807 connected to the system bus 1805, or may also be connected to other types of networks or remote computer systems (not shown) using the network interface unit 1807.

The memory further includes at least one instruction, at least one program, a code set, or an instruction set. The at least one instruction, the at least one program, the code set, or the instruction set are stored in the memory. The central processing unit 1801 implements all or part of the steps in the method for transmitting the service code block stream or the method for monitoring the quality of service shown in the above embodiments by executing the at least one instruction, the at least one program, the code set, or the instruction set.

In an exemplary embodiment, a computer-readable storage medium is further provided. The computer-readable storage medium stores at least one computer program therein. The computer program is loaded and executed by a processor to implement all or part of the steps in the above method for transmitting the service code block stream, or implement all or part of the steps of the above method for monitoring the quality of service. For example, the computer-readable storage medium may be a read-only memory (ROM), a random access memory (RAM), a compact disc read-only memory (CD-ROM), a magnetic tape, a floppy disk, an optical data storage device and the like.

In an exemplary embodiment, a computer program product is further provided. The computer program product includes at least one computer program, and the computer program is loaded by a processor and executes all or part of the steps in the above method for transmitting the service code block stream, or all or part of the steps of the above method for monitoring the quality of service shown in any of the above embodiments.

Those skilled in the art will easily figure out other implementation solutions of the present application after considering the specification and practicing the invention disclosed here. The present application intends to cover any transformation, usage or adaptive change of the present application, and these transformations, usages or adaptive changes conform to a general principle of the present application and include common general knowledge or conventional technical means in the technical field not disclosed by the present application. The specification and the embodiments are merely regarded as exemplary, and the true scope and spirit of the present application are indicated by the claims.

It should be appreciated that the present application is not limited to the exact structure that has been described above and shown in the accompanying drawings, and that various modifications and changes may be made without departing from the scope of the present application. The scope of the present application is limited merely by the appended claims.

## Claims

1. A method for transmitting a service code block stream, applied to a first communication device, comprising:
receiving a target service code block stream sent by a second communication device, wherein the first communication device and the second communication device are communication devices in a service pipeline carrying a target service, and the first communication device is configured as a source side of a target tandem connection maintenance called TCM segment;
inserting a first operation, administration, maintenance called OAM code block into the target service code block stream, wherein a value of a target field of the first OAM code block is a target value corresponding to the target TCM segment; and
transmitting the target service code block stream into which the first OAM code block is inserted.

2. The method according to claim 1, wherein the target field is a reserved field of an OAM code block.

3. The method according to claim 2, wherein the reserved field is 10th to 11th bits of the OAM code block.

4. The method according to claim 3, wherein a value of the reserved field comprises one of the following:
a first value, used to indicate that the OAM code block is a code block of path layer OAM;
a second value, used to indicate that the OAM code block is a code block of a first TCM segment;
a third value, used to indicate that the OAM code block is a code block of a second TCM segment;
or
a fourth value, used to indicate that the OAM code block is a code block of a third TCM segment;
wherein the target value comprises one of the following: the second value, the third value, or the fourth value.

5. The method according to claim 2, wherein the reserved field is 38th to 41th bits of the OAM code block.

6. The method according to claim 5, wherein a value of the reserved field comprises one of the following:
a first value, used to indicate that the OAM code block is a code block of path layer OAM;
a second value, used to indicate that the OAM code block is a code block of a first TCM segment;
a third value, used to indicate that the OAM code block is a code block of a second TCM segment;
a fourth value, used to indicate that the OAM code block is a code block of a third TCM segment;
or
a fifth value, being a reserved value and comprising a value, except the first value, the second value, the third value, and the fourth value, in all values that are able to be represented by the 38th to 41th bits;
wherein the target value comprises one of the following: the second value, the third value, or the fourth value.

7. The method according to claim 1, wherein the target field is a feature field of the OAM code block.

8. The method according to claim 7, wherein the feature field is 34th to 37th bits of the OAM code block.

9. The method according to claim 8, wherein a value of the feature field comprises one of the following:
a first value, used to indicate that the OAM code block is a code block of path layer OAM;
a second value, used to indicate that the OAM code block is a code block of a first TCM segment;
a third value, used to indicate that the OAM code block is a code block of a second TCM segment;
or
a fourth value, used to indicate that the OAM code block is a code block of a third TCM segment;
wherein the target value comprises one of the following: the second value, the third value, or the fourth value.

10. The method according to any one of claims 1 to 9, wherein inserting the first OAM code block into the target service code block stream comprises:
periodically inserting the first OAM code block into the target service code block stream according to a preset code block interval.

11. A method for monitoring quality of service, applied to a third communication device, comprising:
receiving a target service code block stream sent by a fourth communication device, wherein the third communication device and the fourth communication device are communication devices in a service pipeline carrying a target service, and the third communication device is configured as a sink side of a target TCM segment;
monitoring quality of service of the target TCM segment by detecting a first OAM code block in the target service code block stream, wherein a value of a target field of the first OAM code block is a target value corresponding to the target TCM segment; and
transmitting the target service code block stream to a fifth communication device, wherein the fifth communication device is a communication device located downstream of the third communication device in the service pipeline.

12. The method according to claim 11, wherein the target field is a reserved field of an OAM code block.

13. The method according to claim 12, wherein the reserved field is 10th to 11th bits of the OAM code block.

14. The method according to claim 12, wherein the reserved field is 38th to 41th bits of the OAM code block.

15. The method according to claim 11, wherein the target field is a feature field of an OAM code block.

16. The method according to claim 15, wherein the feature field is 34th to 37th bits of the OAM code block.

17. The method according to any one of claims 11 to 16, wherein transmitting the target service code block stream to the fifth communication device comprises:
extracting the first OAM code block from the received target service code block stream; and
transmitting to the fifth communication device the target service code block stream from which the first OAM code block is extracted.

18. The method according to any one of claims 11 to 16, wherein monitoring the quality of service of the target TCM segment by detecting the first OAM code block in the target service code block stream comprises:
detecting the first OAM code block contained in the target service code block stream; and
determining, according to the detected first OAM code block, whether a service carrying pipeline between a source side of the target TCM segment and a sink side of the target TCM segment has a fault.

19. The method according to claim 18, further comprising:
switching, in a case where the service carrying pipeline between the source side of the target TCM segment and the sink side of the target TCM segment is determined to have a fault, the service carrying pipeline between the source side of the target TCM segment and the sink side of the target TCM segment.

20. A system for monitoring quality of service, comprising:
a first communication device, configured to perform the method for transmitting the service code block stream according to any one of claims 1 to 10; and
a third communication device, configured to perform the method for monitoring the quality of service according to any one of claims 11 to 19.

21. A communication device, wherein the communication device comprises a processor and a memory, the memory stores a program or an instruction which is able to be run on the processor, and the program or the instruction, when executed by the processor, implements the method for transmitting the service code block stream according to any one of claims 1 to 10, or implements the method for monitoring the quality of service according to any one of claims 11 to 19.

22. A readable storage medium, wherein the readable storage medium stores a program or an instruction thereon, and the program or the instruction, when executed by a processor, implements the method for transmitting the service code block stream according to any one of claims 1 to 10, or implements the method for monitoring the quality of service according to any one of claims 11 to 19.
